# EUROPEAN PATENT SPECIFICATION

(11) **EP 2 477 251 B1**
(45) Date of publication and mention of the grant of the patent: **15.11.2017**
(21) Application number: 12151060.6
(22) Date of filing: 13.01.2012
(51) Int. Cl.: H01M 2/04, H01M 2/06, H01M 2/08, H01M 2/26, H01M 2/30, H01M 10/04, H01M 2/02

(54) **Electric Storage Device**
Elektrische Speichervorrichtung
Dispositif de stockage électrique

(30) Priority: 17.01.2011 JP 2011007148
(43) Date of publication of application: 18.07.2012
(73) Proprietor: GS Yuasa International Ltd., Kisshoin, Minami-ku, Kyoto-shi, Kyoto 601-8520 (JP)
(72) Inventor: Kawamoto, Hajime, Osaka-shi Osaka 537-0025 (JP); Tsutsumi, Masakazu, Kyoto-shi Kyoto 601-8520 (JP); Nakamura, Jun, Kyoto-shi Kyoto 601-8520 (JP)
(74) Representative: Vossius & Partner Patentanwälte Rechtsanwälte mbB

(56) References cited:
- EP-A1- 2 388 849
- WO-A1-2009/142022
- JP-A- 2000 106 160
- JP-A- 2000 294 225
- JP-A- 2005 056 649
- JP-A- 2008 192 552
- JP-A- 2009 259 524
- US-A1- 2003 124 420

## Description

The present invention relates to an electric storage device including an electrode assembly, a case that houses the electrode assembly, and a rivet that passes through a defining wall of the case.

In recent years, rechargeable and dischargeable electric storage devices such as battery cells (e.g., a lithium ion battery cell and a nickel-metal hydride battery cell) and capacitors (e.g., an electric double layer capacitor) have been adopted as the power sources of vehicles (e.g., an automobile and a motorcycle) and various devices (e.g., a portable terminal and a laptop computer). For example, various types of battery cells have been provided. One of them is a battery cell that includes: an electrode assembly; a current collector that is electrically connected to the electrode assembly; a case that houses the electrode assembly and the current collector; an external terminal arranged outside the case; an inner sealing member arranged along the inner surface of a defining wall of the case; an outer sealing member arranged along the outer surface of the defining wall; and a rivet that is inserted through the defining wall, the inner sealing member and the outer sealing member, wherein the external terminal and the current collector are electrically connected to each other via the rivet.

The rivet includes an electrically conductive material. The rivet includes: a shaft-shaped body; and a solid shaft-shaped or hollow shaft-shaped (tubular) insertion part which is formed continuously with the body. The outer diameter of the insertion part is sized to be smaller than the outer diameter of the body. The insertion part is inserted through the defining wall of the case, the inner sealing member, the outer sealing member and the current collector, and in this state, the insertion part is crimped at an end (cf., JP-A-2002-324541 (Patent Document 1), for example).

As a result, the end of the insertion part of the rivet has an enlarged diameter. That is, in a battery cell using a rivet having a solid shaft-shaped insertion part, the end of the insertion part of the rivet is completely flattened with the diameter enlarged. In a battery cell using a rivet having a hollow shaft-shaped insertion part, the end of the insertion part of the rivet is flattened while being forced radially outward to be deformed into a flange shape.

Accordingly, in these battery cells, the rivet integrally unites the defining wall of the case, the inner sealing member, the outer sealing member and the current collector between the body and the crimped end, which apply a compressive force to the peripheral area of the through-hole through which the rivet has been inserted. As a result, the inner and outer sealing members are brought into close contact with the defining wall of the case to seal the through-hole through which the rivet has been inserted, thereby providing sealing within the case. Also, the current collector and the electrode assembly are fixed to the case via the rivet.

According to a rivet having a solid shaft-shaped insertion part, it may not be possible to crimp the end of the insertion part of the rivet sufficiently by a single crimping operation because of the high stiffness of the insertion part. This means several crimping operations are required. However, repeated crimping operations cause high force to act on the rivet each time the crimping is performed, which could result in deformation of the defining wall of the case.

If this occurs, the degree of contact of the inner and outer sealing members with the defining wall decreases, leading to the possibility that sealing of the case may be not be ensured. In particular, when the case includes an aluminum alloy to reduce the weight of the battery cell, deformation of the defining wall caused by the crimping of the rivet becomes significant due to the softness of an aluminum alloy compared to steel such as stainless steel and the like, resulting in a sharp decrease of sealing of the case.

In contrast, with a rivet having a hollow shaft-shaped insertion part, the end of the insertion part is easily deformed by crimping because the insertion part is thin walled with its central portion being hollow.

However, the hollow shaft-shaped insertion part has a lower stiffness than the solid shaft-shaped insertion part. Because of this, at the time of crimping, the end of the insertion part may not be completely expanded outward but partly forced toward the hollow portion. If this occurs, the end of the insertion part may not be formed into a flange shape having an outer diameter sufficient to hold the periphery of the through-hole through which the rivet has been inserted.

Accordingly, even with the rivet having a hollow shaft-shaped insertion part, it is sometime impossible to ensure sealing of the case as with the rivet having a solid shaft-shaped insertion part.

This problem occurs not only in battery cells but also in capacitors (e.g., a double layer capacitor and the like) as well. Document JP 2005 056649 discloses an electric storage device comprising an electrode assembly, a case that houses the electrode assembly, and a rivet that passes through a defining wall of the case.

An object of the present invention is to provide an electric storage device that can ensure sealing of a case.

An electric storage device according to the present invention as defined by the features of claim 1 includes:
an electrode assembly;
a case that houses the electrode assembly, the case including a defining wall;
a rivet that passes through the defining wall, the rivet having a body and an insertion part formed continuously with the body;
a conductive member that is electrically connected to the rivet; and
a sealing member arranged between the defining wall and the conductive member and between the defining wall and the body,
wherein the insertion part has a portion that is inserted through the defining wall, the sealing member and the conductive members;
the insertion part has a diameter smaller than that of the body at least in the portion inserted through the defining wall, the sealing member and the conductive member;
the insertion part has a hollow shaft-shaped end with a non-through hole extending in an axial direction of the insertion part, the end being crimped in a state where the insertion part has been inserted through the defining wall, the sealing member and the conductive member; and
a bottom of the non-through hole is located between the defining wall and the conductive member.

In an embodiment of the present invention, the electric storage device may have a configuration in which:

the insertion part is inserted through the defining wall toward the conductive member; and

the sealing member comprises two sealing members, one of which is arranged between the defining wall and the conductive member and the other of which is arranged between the defining wall and the body.

In this instance,
at least one of the sealing members may have an annular projection that is inserted through the defining wall; and
the annular projection may be inserted through the defining wall while covering the periphery of the insertion part.

In another embodiment of the present invention, the electric storage device may have a configuration in which:
the end of the insertion part is crimped to have a thickness, which decreases as it advances away from the axis of the insertion part.

In still another embodiment of the present invention, the electric storage device may have a configuration in which:
the insertion part is crimped only at the hollow shaft-shaped portion of the non-through hole.

In still another embodiment of the present invention, the electric storage device may have a configuration in which:
the bottom of the non-through hole is located at a position between the defining wall and the conductive member and close to the conductive member.

In still another embodiment of the present invention, the electric storage device may have a configuration in which:
the conductive member is a current collector arranged inside the case, the current collector being electrically connected to the electrode assembly;
the sealing member comprises an inner sealing member arranged on an inner surface of the defining wall; and
the insertion part is inserted through the defining wall, the inner sealing member and the current collector from outside the case to inside the case.

In yet another embodiment of the present invention, the electric storage device may have a configuration in which:
the conductive member is a current collector arranged inside the case, the current collector being electrically connected to the electrode assembly;
the sealing member comprises an outer sealing member arranged on an outer surface of the defining wall; and
the insertion part is inserted through the outer sealing member, the defining wall and the current collector from outside the case to inside the case.

In another embodiment of the present invention, the electric storage device may have a configuration in which:
the conductive member is a drawing member arranged outside the case;
the sealing member comprises an inner sealing member arranged on an inner surface of the defining wall; and
the insertion part is inserted through the inner sealing member, the defining wall and the drawing member from inside the case to outside the case.

In still another embodiment of the present invention, the electric storage device may have a configuration in which:
the conductive member is a drawing member arranged outside the case;
the sealing member comprises an outer sealing member arranged on an outer surface of the defining wall; and
the insertion part is inserted through the defining wall, the outer sealing member and the drawing member from inside the case to outside the case.

In yet another embodiment of the present invention, the electric storage device may have a configuration in which:
the conductive member is a current collector arranged inside the case, the current collector being electrically connected to the electrode assembly;
the sealing member comprises an inner sealing member arranged on an inner surface of the defining wall and an outer sealing member arranged on an outer surface of the defining wall; and
the insertion part is inserted through the outer sealing member, the defining wall, the inner sealing member and the current collector from outside the case to inside the case.

In another embodiment of the present invention, the electric storage device may have a configuration in which:
the conductive member is a drawing member arranged outside the case;
the sealing member comprises an outer sealing member arranged on an outer surface of the defining wall and an inner sealing member arranged on an inner surface of the defining wall; and
the insertion part is inserted through the inner sealing member, the defining wall, the outer sealing member and the drawing member from inside the case to outside the case.

### BRIEF DESCRIPTION OF THE DRAWINGS

FIG. 1 is a perspective view of a battery cell according to an embodiment of the present invention;
FIG. 2 is a side view of the battery cell;
FIG. 3 is a cross-sectional view taken along line A-A in FIG. 1;
FIG. 4 is a cross-sectional view taken along line B-B in FIG. 1;
FIG. 5 is an enlarged cross-sectional view of a terminal part of the battery cell;
FIG. 6 is an enlarged cross-sectional view of a rivet and its vicinity;
FIG. 7 is an exploded perspective view of the terminal part as seen from above;
FIG. 8 is an exploded perspective view of the terminal part as seen from below; and
FIG. 9 is an enlarged cross-sectional view of a terminal part of a battery cell according to another embodiment.

### DETAILED DESCRIPTION OF THE PREFERRED EMBODIMENTS

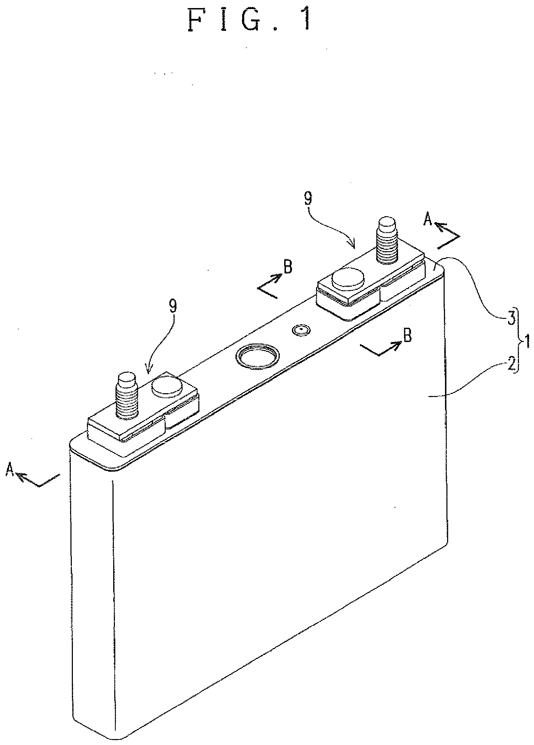

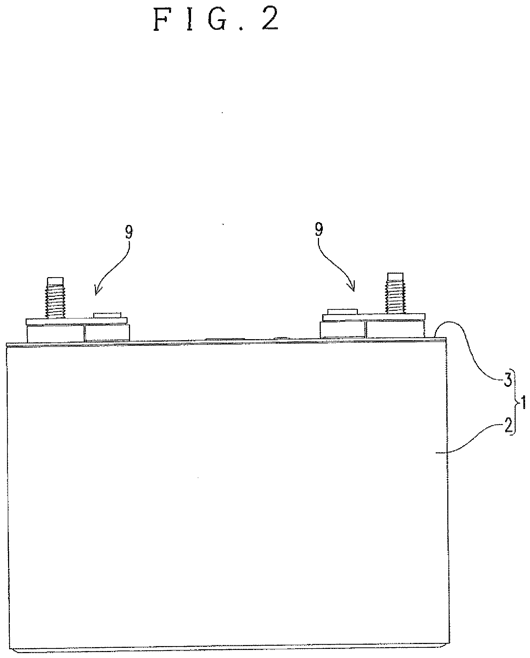

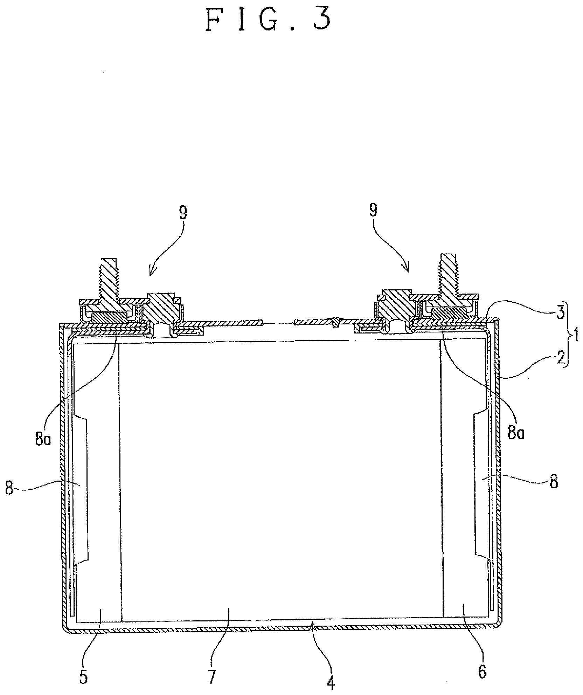

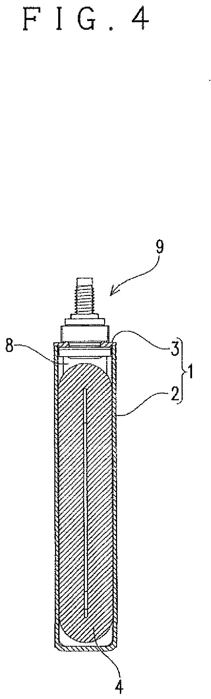

A battery cell which is an embodiment of an electric storage device according to the present invention will be described below with reference to the drawings. A battery cell according to the present embodiment is a non-aqueous electrolyte secondary battery cell and, more particularly, a lithium ion secondary battery cell. As shown in FIGS. 1 to 4, the battery cell according to the present embodiment includes a case 1 which is composed of a case body 2 and a cover plate 3 which covers an opening of the case body 2 to seal the case 1. The cover plate 3 includes terminal structures 9 which are electrically connected to an electrode assembly 4 housed in the case 1.

The case body 2 and the cover plate 3 include a metal such as an aluminum alloy, a stainless alloy and the like. In this embodiment, the case body 2 and the cover plate 3 include an aluminum alloy. The adopted aluminum alloys include an untreated aluminum alloy (F-temper material), an annealed aluminum alloy (O-temper material), a work-hardened aluminum alloy (H-temper material) and a heat treated aluminum alloy other than the above (T-temper material). The case body 2 has a rectangular box shape that is flat in the width direction, so that it houses a winding type electrode assembly 4 that has been formed into an elliptic cylinder. The cover plate 3 is a rectangular plate that corresponds in shape to the opening of the case body 2.

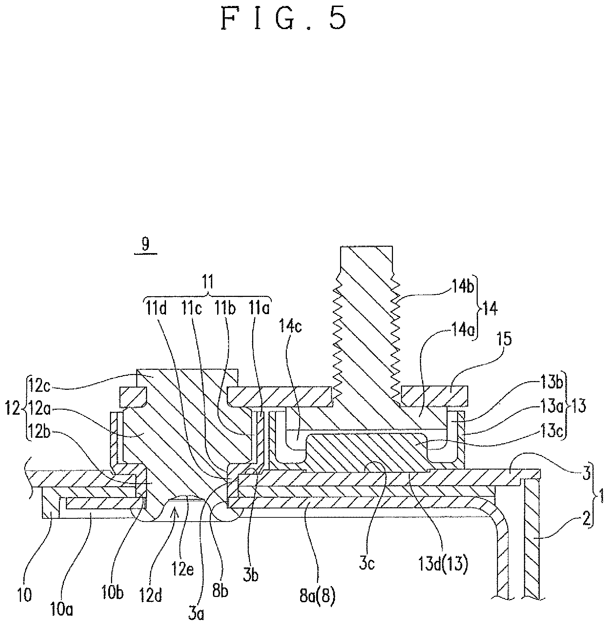

As shown in FIGS. 5-8, the cover plate 3 has two through-holes 3a, which are spaced from each other in the longitudinal direction, each designed for insertion of a later described rivet 12. The peripheral area of each through-hole 3a is compression formed in the thickness direction by coining, for example. This makes the peripheral area of each through-hole 3a thinner than the remaining area. The compression forming of the peripheral area of each through-hole 3a causes work hardening of the peripheral area of each through-hole 3a, which results in an increase in stiffness.

The peripheral areas of the through-holes 3a are made thinner by compression forming, and the cover plate 3 is therefore provided with recesses (first recesses) 3b in the outer surface, into which outer gaskets 11 can be fitted.

Returning to FIGS. 1-4, the cover plate 3 is fitted into the opening of the case body 2 and hermetically fixed by laser welding or the like.

In the electrode assembly 4, a band-shaped positive electrode sheet 5 and a band-shaped negative electrode sheet 6 which are displaced to each other in different lateral directions with a band-shaped separator 7 sandwiched therebetween are wound about a lateral rotation axis into a cylinder in the shape of a vertically long ellipse. The electrode assembly 4 is entirely covered with an insulating cover (not shown) including an insulating sheet and is housed in the case 1 while being insulated from the case 1. The positive electrode sheet 5 includes aluminum foil carrying a positive electrode active material at the surface. The negative electrode sheet 6 includes copper foil carrying a negative electrode active material at the surface. The positive electrode sheet 5 and the negative electrode sheet 6 each have a non-overlapped portion not coated with the active material at an edge in the lateral direction in which the sheet is displaced. With this arrangement, at the lateral ends of the electrode assembly 4, the aluminum foil and copper foil are exposed, and thus these metal foils of the positive electrode and negative electrode project from the overlapped portion in a wound configuration.

Metal foils projecting at the lateral ends of the electrode assembly 4 are electrically connected to respective current collectors 8. The current collectors 8 are vertically long conductive metal members. More specifically, the current collector 8 for the positive electrode includes aluminum or an aluminum alloy, and the current collector 8 for the negative electrode includes copper or a copper alloy. An upper part of each current collector 8 is horizontally bent to constitute a connection part 8a. A part extending downward from the connection part 8a is divided into a front part and a rear part, which project downward. The two front and rear parts are sandwiched between holding plates (not shown) together with the corresponding end of the electrode assembly 4 and are connected and fixed by ultrasonic welding or the like.

The terminal structures 9 include a terminal structure 9 for the positive electrode and a terminal structure 9 for the negative electrode. As shown in more detail in FIGS. 5-8, each terminal structure 9 includes a plastic plate 10, an outer gasket 11, a rivet 12, a terminal retainer 13, a terminal bolt 14, and a drawing member 15. The plastic plate 10 and outer gasket 11 are arranged inside and outside the case 1 with through-holes 3a formed in the right and left ends of the cover plate 3 interposed therebetween. The rivet 12 is inserted into the through-hole 3a via the plastic plate 10 and outer gasket 11 and is electrically connected to the connection part 8a of the current collector 8. The terminal retainer 13 is arranged close to the outer gasket 11. The terminal bolt 14 is arranged at an outer surface of the cover plate 3 via the terminal retainer 13. The drawing member 15 electrically connects the terminal bolt 14 and the rivet 12. With this configuration, the electrode assembly 4 inside the case 1 and the terminal bolt 14 are electrically connected to each other.

It is to be noted that the plastic plate 10 and the outer gasket 11 each correspond to a sealing member. Also, the plastic plate 10, the outer gasket 11 and the terminal retainer 13 each correspond to an insulating member. The rivet 12 corresponds to an auxiliary terminal. The terminal bolt 14 represents an external terminal. The drawing member 15 corresponds to a conductive member.

The plastic plate 10 is a synthetic resin with insulating and sealing properties. More specifically, for example, polyphenylene sulfide (PPS) resin is used as the material for the plastic plate 10. However, the material is not limited to this, and any appropriate material can be selected. The plastic plate 10 has a rectangular shape. A lower surface of the plastic plate 10 includes a recess 10a which can receive the connection part 8a of the current collector 8. The plastic plate 10 includes a through-hole 10b which coincides in position with a through-hole 8b formed in the connection part 8a while the recess 10a receives the connection part 8a of the current collector 8.

The outer gasket 11 is a synthetic resin with insulating properties and sealing properties. More specifically, for example, polyphenylene sulfide (PPS) resin is used as the material for the plastic plate 10. However, the material is not limited to this, and any appropriate material can be selected.

The outer gasket 11 is slightly larger than a body 12a of the rivet 12 and has a rectangular shape. The outer gasket 11 includes a surrounding circumferential outer wall part 11a at the outer periphery, which is formed by recessing an upper surface except for the outer periphery. The outer gasket 11 includes a recess 11b which can receive the body 12a of the rivet 12 inside the outer wall part 11a. The outer gasket 11 includes a through-hole 11c into which a first crimping part 12b of the rivet 12 can be inserted while the recess 11b receives the body 12a of the rivet 12. A lower surface of the outer gasket 11 includes an annular projection 11d which extends through the through-hole 3a of the cover plate 3 and is inserted into the through-hole 10b of the plastic plate 10.

Note that the plastic plate 10 is arranged on a lower surface (an inner surface) of the cover plate 3 and is thus arranged inside the case 1. The outer gasket 11 is arranged at an upper surface (the outer surface) of the cover plate 3 and is thus arranged at an outer surface of the case 1. A region of the upper surface of the cover plate 3 where the outer gasket 11 is arranged includes a non-circular recess (first recess) 3b which can receive a lower part (bridge part) of the outer gasket 11. When the lower part (a joining surface to the cover plate 3) of the outer gasket 11 is inserted into the first recess 3b, the outer gasket 11 is restrained from rotating about its axis. Note that, in the present embodiment, the first recess 3b is formed to be rectangular so as to correspond to the shape of the rectangular lower part of the outer gasket 11. The first recess 3b is formed by coining or the like.

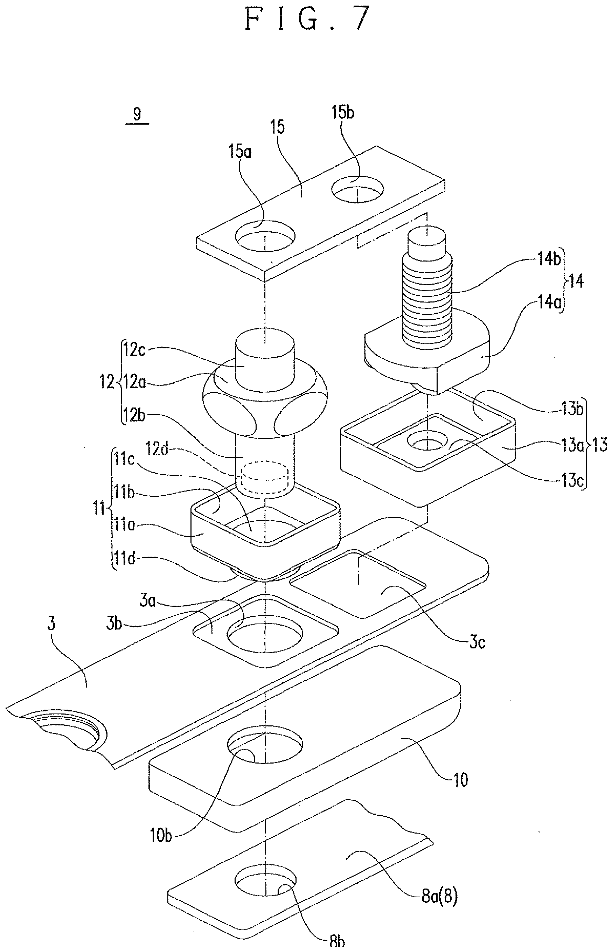

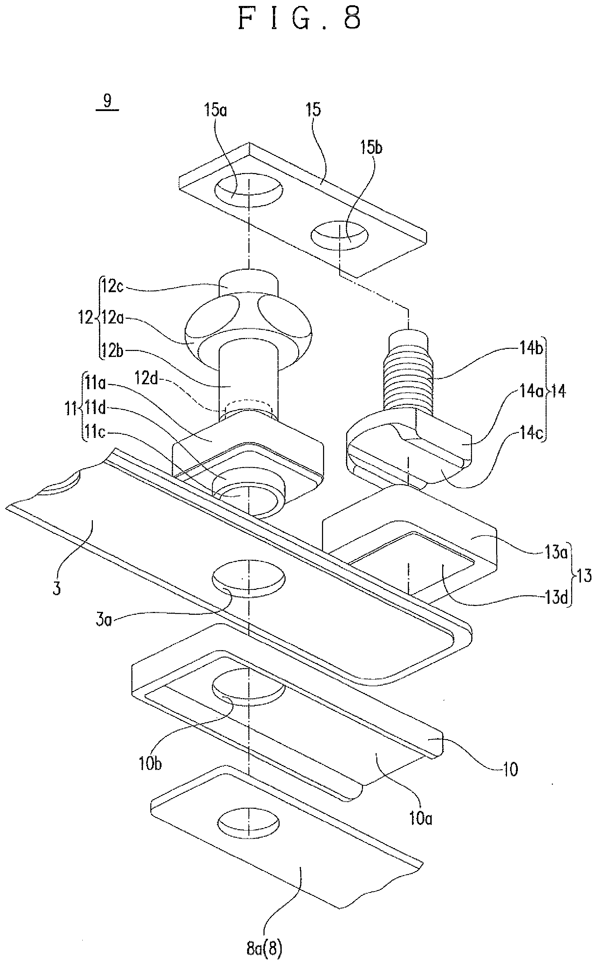

The rivets 12 include a rivet 12 on the positive electrode side and a rivet 12 on the negative electrode side. The rivet 12 on the positive electrode side is a conductive metal member including aluminum or an aluminum alloy. The rivet 12 on the negative electrode side is a conductive metal member including copper or a copper alloy. As shown in FIGS. 7 and 8, the rivet 12 has a first crimping part 12b as an insertion part projecting downward from the lower surface of the body 12a. The rivet 12 has a second crimping part 12c as another insertion part projecting upward from the upper surface of the body 12a. The first crimping part 12b and the second crimping part 12c each look like a shaft and have a smaller diameter than the body 12a.

The body 12a has a shaft shape. The body 12a has an outer diameter larger than the diameter of the through-hole 3a of the cover plate 3. The body 12a has four flat surfaces (no reference numbers are allocated), which are evenly spaced apart in the circumferential direction, on the outer circumference. Each of the four flat surfaces faces the inner wall surface of the outer wall part 11a of the outer gasket 11 with the body 12a received in the recess 11b of the outer gasket 11.

The first crimping part 12b is a portion that is inserted through the through-hole 3a of the cover plate 3, the through-hole 8b of the connection part 8a of the current collector 8, the through-hole 10b of the plastic plate 10 and the through-hole 11c of the outer gasket 11. The first crimping part 12b is inserted from outside the cover plate 3 to inside the cover plate 3, i.e., from the side of the cover plate 3 to the side of the current collector 8. In this embodiment, the annular projection 11d of the outer gasket 11 is inserted through the through-hole 3a of the cover plate 3 and the through-hole 10b of the plastic plate 10. This means when the first crimping part 12b is inserted through the through-hole 11c of the outer gasket 11, the first crimping part 12b is also inserted through the through-hole 3a of the cover plate 3 and the through-hole 10b of the plastic plate 10.

The first crimping part 12b is sized so that its end projects from the inner surface of the plastic plate 10 toward the inside of the case 1 when it has been inserted through the through-hole 3a of the cover plate 3, the through-hole 10b of the plastic plate 10, the through-hole 11c of the outer gasket 11 and the through-hole 8b of the current collector 8.

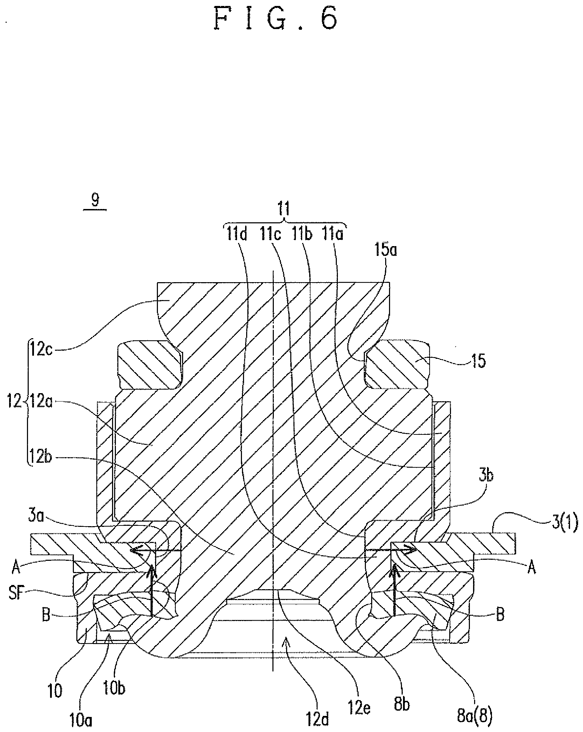

The first crimping part 12b has at its end an axially extending non-through hole 12d. Thus, the end of the first crimping part 12b has a hollow shaft shape. As shown in FIG. 6, the bottom 12e of the non-through hole 12d is located between the cover plate 3 and the current collector 8 with the end of the first crimping part 12b crimped.

The non-through hole 12d is formed by a drill. In association with this, the bottom 12e of the non-through hole 12d has a tapered shape corresponding to the shape of the end of the drill.

The end of the first crimping part 12b is squeezed outward or flattened while being forced radially outward by crimping, so as to be formed into a flange shape having a diameter larger than that of a base end of the first crimping part 12b. That is, the end of the first crimping part 12b has a diameter larger than that of the through-hole 3a of the cover plate 3 after being crimped.

As a result, the body 12a and the flange shaped end of the first crimping part 12b together hold the peripheries of the through-holes 3a, 8b, 10b and 11c therebetween while bringing the outer gasket 11 into close contact with the outer surface of the cover plate 3 and bringing the plastic plate 10 into close contact with the inner surface of the cover plate 3. This provides sealing around the peripheries of the through-holes 3a, 8b, 10b and 11c, thereby maintaining sealing within the case 1. As will be understood, the crimping of the first crimping part 12b is carried out prior to the welding of the cover plate 3 onto the case body 2.

As shown in FIGS. 7 and 8, the second crimping part 12c has a solid shaft shape having a diameter smaller than that of the body 12a. The second crimping part 12c has a shaft diameter that allows itself to be inserted into a later-described first through-hole 15a formed in the drawing member 15. As shown in FIGS. 5 and 6, the end of the second crimping part 12c is crimped with the second crimping part 12c inserted through the first through-hole 15b of the drawing member 15. Thus, the drawing member 15 is held between the body 12a and the end of the second crimping part 12c deformed into a flange shape, so as to be physically and electrically connected to the rivet 12. The crimping of the second crimping part 12c is carried out prior to the crimping of the first crimping part 12b.

The dimensional relationship among the through-hole 3a of the cover plate 3, the through-hole 8b of the connection part 8a of the current collector 8, the through-hole 10b of the plastic plate 10, the through-hole 11c and annular projection 11d of the outer gasket 11, and the first crimping part 12b of the rivet 12 will be described. As shown in detail in FIG. 5, the inner diameter of the through-hole 3a of the cover plate 3 and the inner diameter of the through-hole 10b of the plastic plate 10 are the same or substantially the same. The inner diameter of the through-hole 3a of the cover plate 3 and the inner diameter of the through-hole 10b of the plastic plate 10 are the same or substantially the same as the outer diameter of the annular projection 11d of the outer gasket 11. The length of the annular projection 11d of the outer gasket 11 is the same or substantially the same as the sum of the thicknesses of the cover plate 3 and plastic plate 10. The inner diameter of the annular projection 11d of the outer gasket 11 and the inner diameter of the through-hole 8b of the connection part 8a of the current collector 8 are the same or substantially the same. The inner diameter of the annular projection 11d of the outer gasket 11 and the inner diameter of the through-hole 8b of the connection part 8a of the current collector 8 are the same or substantially the same as the outer diameter of the first crimping part 12b of the rivet 12. The length of the first crimping part 12b of the rivet 12 is the same or substantially the same as the sum of the thicknesses of the cover plate 3, the connection part 8a of the current collector 8, the plastic plate 10, and the outer gasket 11.

Accordingly, the body 12a of the rivet 12 is inserted into the recess 11b of the outer gasket 11, the first crimping part 12b of the rivet 12 extends through the through-hole 11c at a bottom surface of the recess 11b and is inserted into the through-hole 8b of the connection part 8a of the current collector 8, and an end portion of the first crimping part 12b projecting downward from the through-hole 8b of the connection part 8a is crimped from below. With this configuration, the rivet 12 is attached to the cover plate 3 while the rivet 12 is electrically connected to the connection part 8a of the current collector 8 and is insulated from the cover plate 3.

The terminal retainer 13 is a synthetic resin with insulating properties, like the plastic plate 10 and outer gasket 11. Note that a reinforced resin material obtained by uniformly mixing polyphenylene sulfide resin with glass fiber as a filler, for example, is used as the material for the terminal retainer 13 in order to make the hardness higher than those of the plastic plate 10 and outer gasket 11. Alternatively, polytetrafluoroethylene-perfluoroalkylvinylether copolymer (PFA) resin is used instead of polyphenylene sulfide resin. An inorganic fiber other than glass fiber may be used. However, the material is not limited to this, and any appropriate material can be selected. However, the terminal retainer 13 may not have insulating properties. When aluminum or an aluminum alloy is used as a material for the case 1, the terminal retainer 13 of the positive electrode may be non-isolated so that the potential of the positive electrode may be identical with the potential of the case 1. This suppresses corrosion of the case 1. When iron or stainless steel is used as a material for the case 1, the terminal retainer 13 of the negative electrode may be non-isolated so that the potential of the negative electrode may be identical with the potential of the case 1. In order for the positive electrode or negative electrode and the case 1 to have an identical potential, the terminal retainer 13 may comprise a material containing a conductive material (e.g., carbon) as well as a filler mixed therein so that the terminal retainer 13 becomes semi-conductive, for example.

The terminal retainer 13 is slightly larger than a head 14a of the terminal bolt 14 and has a rectangular shape. The terminal retainer 13 includes a surrounding circumferential outer wall part 13a at the outer periphery, which is formed by recessing an upper surface except for the outer periphery. The terminal retainer 13 includes a recess 13b which can receive the head 14a of the terminal bolt 14 inside the outer wall part 13a. The terminal retainer 13 includes a non-circular fitting projection 13c in the recess 13b. The fitting projection 13c fits in a non-circular fitting recess (fitting groove) 14c formed in the head 14a of the terminal bolt 14 while the recess 13b receives the head 14a of the terminal bolt 14. Accordingly, when the fitting projection 13c in the recess 13b (i.e., the fitting projection 13c at a lower position than an upper end surface of the outer wall part 11a in the recess 13b) fits in the fitting recess 14c of the head 14a of the terminal bolt 14, the terminal retainer 13 receives the terminal bolt 14 while the terminal bolt 14 is restrained from rotating about its axis. Note that, in the present embodiment, the fitting recess 14c of the terminal bolt 14 is formed by cutting out a part extending from one side to the opposite side and has a rectangular shape. The fitting projection 13c of the terminal retainer 13 is formed to be rectangular so as to correspond to the rectangular fitting recess 14c.

A lower surface of the terminal retainer 13 includes a non-circular projection 13d. In the present embodiment, the projection 13d is a rectangular projecting surface (raised surface). A region of the upper surface of the cover plate 3 where the terminal retainer 13 is arranged includes a non-circular recess (second recess) 3c which can receive the projection 13d of the terminal retainer 13. When the projection 13d of the terminal retainer 13 is inserted into the second recess 3c, the terminal retainer 13 is restrained from rotating about its axis, like the outer gasket 11. Note that, in the present embodiment, the second recess 3c is formed to be rectangular so as to correspond to the rectangular projection 13d. The second recess 3c is formed by coining or the like.

When the terminal retainer 13 is to be arranged on the upper surface of the cover plate 3, the lower surface (including a surface of the projection 13d) of the terminal retainer 13 is treated by appropriate means so that the glass fiber is exposed at the lower surface of the terminal retainer 13. A preferred example of the appropriate means is to mechanically cut off the lower surface of the terminal retainer 13. For example, the glass fiber is exposed by cutting the lower surface of the terminal retainer 13 with a file or the like. The projection 13d at the lower surface of the terminal retainer 13 fits in the second recess 3c at the upper surface of the cover plate 3, and the terminal retainer 13 is fixed to the upper surface of the cover plate 3. A method for fixing the terminal retainer 13 to the cover plate 3 is not particularly limited. For example, appropriate adhesive means (e.g., an adhesive film, a liquid adhesive, or a solid adhesive) may be supplied to at least one of the upper surface (in particular, the second recess 3c) of the cover plate 3 and the lower surface of the terminal retainer 13, and the terminal retainer 13 may be fixed to the cover plate 3 via the adhesive means. Although a common adhesive can be used as the adhesive, an epoxy resin adhesive may preferably be used. An epoxy resin has poor adhesion to the synthetic resin used for the terminal retainer 13 but has good adhesion to an inorganic fiber. Accordingly, the glass fiber exposed at the lower surface of the terminal retainer 13 allows the terminal retainer 13 to be firmly bonded to the cover plate 3.

The terminal bolt 14 is intended to electrically connect the battery cell to an external device. The terminal bolt 14 is a conductive metal member with high strength including iron, steel such as stainless steel and chromium molybdenum steel, or the like. As described above, the terminal bolt 14 includes the head 14a sized to be inserted into the recess 13b of the terminal retainer 13 and a shaft 14b projecting from an upper surface of the head 14a and having a male thread at an outer peripheral surface. A lower surface of the head 14a includes a non-circular fitting recess (fitting groove) 14c, as described above. Accordingly, when the fitting projection 13c in the recess 13b fits in the fitting recess 14c, the terminal bolt 14 is insulated from the cover plate 3 and is supported on the terminal retainer 13 while the shaft 14b is restrained from rotating about its axis.

The drawing member 15 is a rectangular conductive metal member including a copper alloy or the like. A surface of the drawing member 15 is plated with nickel for preventing rust, improving slipperiness, and other purposes. The drawing member 15 includes a first through-hole 15a at one end and a second through-hole 15b at the other end. The second crimping part 12c of the rivet 12 is inserted into the first through-hole 15a. The shaft 14b of the terminal bolt 14 is inserted into the second through-hole 15b. An end portion of the second crimping part 12c of the rivet 12 which projects upward from the first through-hole 15a of the drawing member 15 is crimped from above. With the crimping, the rivet 12 and drawing member 15 are integrated.

Note that, in the terminal bolt 14, the shaft 14b is simply inserted into the second through-hole 15b of the drawing member 15. However, for example, when a crimp contact of a lead wire of an external device (not shown) fits on the shaft 14b of the terminal bolt 14, and the shaft 14b of the terminal bolt 14 is fixed with a nut, the terminal bolt 14 is slightly lifted, and the upper surface of the head 14a comes into pressure contact with a lower surface of the drawing member 15. This causes the crimp contact of the lead wire together with the drawing member 15 to be held between the head 14a of the terminal bolt 14 and the nut. With this configuration, the crimp contact, terminal bolt 14, and drawing member 15 are electrically connected to one another with reliability. Accordingly, the crimp contact of the lead wire is electrically connected to the electrode assembly 4 via the terminal bolt 14, drawing member 15, rivet 12 and current collector 8 which are insulated from the cover plate 3 by the terminal retainer 13, outer gasket 11, and plastic plate 10. This causes the external device to be electrically connected to the battery cell.

Additionally, the fitting recess 14c of the head 14a of the terminal bolt 14 fitting on the fitting projection 13c in the recess 13b of the terminal retainer 13 fixed on the upper surface of the cover plate 3 reliably stops the terminal bolt 14 from rotating together with the nut when the nut is fixed to the shaft 14b of the terminal bolt 14. Even if there is some clearance between the fitting recess 14c of the head 14a of the terminal bolt 14 and the fitting projection 13c in the recess 13b of the terminal retainer 13, the terminal bolt 14 only rotates idly by a certain degree and poses no special problem.

At this time, since the terminal retainer 13 stops the terminal bolt 14 from rotating, the terminal retainer 13 receives rotational torque from the terminal bolt 14. However, the lower surface of the terminal retainer 13 with the glass fiber exposed is in intimate contact with the upper surface of the cover plate 3, and therefore the terminal retainer 13 is fixed with increased frictional resistance against the cover plate 3. Accordingly, the terminal retainer 13 is reliably stopped from rotating together with the terminal bolt 14 due to rotational torque from the terminal bolt 14. The second recess 3c of the upper surface of the cover plate 3 and the projection 13d at the lower surface of the terminal retainer 13 fitting in with each other make the rotation-stopping effect more remarkable. As described above, since adhesive means (e.g., an adhesive) is supplied to one of the upper surface (in particular, the second recess 3c) of the cover plate 3 and the lower surface of the terminal retainer 13, and the terminal retainer 13 is fixed to the cover plate 3 by the adhesive means, stopping of rotation is further ensured.

Note that if the perimeter of the shaft 14b (male thread part) of the terminal bolt 14 is smaller, i.e., the shaft 14b of the terminal bolt 14 has a smaller diameter, and a synthetic resin such as polyphenylene sulfide resin (PPS) is used alone as the material for the terminal retainer 13, the terminal retainer 13 may not withstand rotational torque from the terminal bolt 14. However, mixing of a synthetic resin with an inorganic fiber such as glass fiber enhances the strength of the terminal retainer 13. The mixing also contributes to cost reduction.

Since the terminal retainer 13 is provided separate from the outer gasket 11 at the cover plate 3, rotational torque is not transmitted to the outer gasket 11, which seals up a gap around the rivet 12. Accordingly, unintentional force is not applied to the outer gasket 11. Sealing with the outer gasket 11 (more specifically, sealing between the lower surface of the outer gasket 11 and the upper surface of the cover plate 3 (an upper surface of the first recess 3b), sealing between an outer peripheral surface of the annular projection 11d of the outer gasket 11 and an inner peripheral surface of the through-hole 3a of the cover plate 3 and an inner peripheral surface of the through-hole 10b of the plastic plate 10, and sealing between an inner peripheral surface of the annular projection 11d of the outer gasket 11 and an outer peripheral surface of the first crimping part 12b of the rivet 12) is not impaired.

Rotational torque applied to the shaft 14b of the terminal bolt 14 is not transmitted to the rivet 12, which is provided separate from the terminal bolt 14. Accordingly, a situation does not occur in which rotation of the rivet 12 causes the rivet 12 and the connection part 8a of the current collector 8 fixed by crimping to come loose to impair the connection therebetween. Additionally, unintentional force is not applied to the plastic plate 10 and outer gasket 11. Further, sealing with the plastic plate 10 and outer gasket 11 (more specifically, sealing between an upper surface of the plastic plate 10 and the lower surface of the cover plate 3, sealing between the lower surface of the outer gasket 11 and the upper surface of the cover plate 3 (the upper surface of the first recess 3b), sealing between the outer peripheral surface of the annular projection 11d of the outer gasket 11 and the inner peripheral surface of the through-hole 3a of the cover plate 3 and the inner peripheral surface of the through-hole 10b of the plastic plate 10, and sealing between the inner peripheral surface of the annular projection 11d of the outer gasket 11 and the outer peripheral surface of the first crimping part 12b of the rivet 12) is not impaired.

The separate provision of the outer gasket 11 and the terminal retainer 13 allows appropriate selection of a material with suitable hardness for a sealing member as the material for the outer gasket 11 and appropriate selection of a material with sufficient hardness to withstand rotational torque from the terminal bolt 14 as the material for the terminal retainer 13. More specifically, since the outer gasket 11 has a greater sealing effect when the outer gasket 11 deforms elastically to come into intimate contact with surfaces of the conductive members (the cover plate 3, current collector 8, and rivet 12), the outer gasket 11 is required to have a certain degree of flexibility. If the terminal retainer 13 is highly flexible, rotational torque from the terminal bolt 14 makes the fitting projection 13c likely to be worn and chipped. As the wear progresses, the rotation-stopping function of the terminal bolt 14 is impaired. For this reason, the terminal retainer 13 is required to have rigidity enough to withstand rotational torque from the terminal bolt 14.

In the rivet 12 according to the present embodiment, the dimension in an axial direction of the body 12a is set to be larger than that of a conventional one so as to prevent or reduce plastic deformation across the rivet 12 caused by crimping by the first crimping part 12b and second crimping part 12c. As a result, the position in height of the drawing member 15 from the upper surface of the cover plate 3 is necessarily higher than that in a conventional terminal structure. The fitting projection 13c of the terminal retainer 13 according to the present embodiment is a part which directly receives rotational torque from the terminal bolt 14 when the terminal retainer 13 stops the terminal bolt 14 from rotating. Accordingly, the fitting projection 13c of the terminal retainer 13 needs to have a sufficient thickness in a direction of height so as to have strength enough to withstand rotational torque. As a result, the position in height of the head 14a of the terminal bolt 14 is high, and the position in height of the drawing member 15 from the upper surface of the cover plate 3 is also necessarily higher than that in a conventional terminal structure. For this reason, in the present embodiment, the outer wall part 11a of the outer gasket 11 is high, and the creepage distance from the upper surface of the cover plate 3 to the upper end surface of the outer wall part 11a is long (the ratio of the creepage distance to the width dimension of the cover plate 3 is preferably 0.15 to 0.3). The outer wall part 13a of the terminal retainer 13 is high, and the creepage distance from the upper surface of the cover plate 3 to an upper end surface of the outer wall part 13a is long (the ratio of the creepage distance to the width dimension of the cover plate 3 is preferably 0.15 to 0.3).

More specifically, the outer wall part 11a of the outer gasket 11 is formed so as to entirely or substantially entirely cover the body 12a of the rivet 12 and such that the upper end surface of the outer wall part 11a is in contact with or is slightly spaced from the lower surface of the drawing member 15. The outer wall part 13a of the terminal retainer 13 is formed so as to entirely or substantially entirely cover the head 14a of the terminal bolt 14 and such that the upper end surface of the outer wall part 13a is in contact with or is slightly spaced from the lower surface of the drawing member 15.

With the above-described configuration, even if the battery cell is exposed to droplets of water generated by condensation or the like or a conductive atmosphere (static electricity or dust), the outer wall part 11a of the outer gasket 11 and the outer wall part 13a of the terminal retainer 13 serve as covers (or barriers). This conveniently prevents a short between the cover plate 3 and the rivet 12 and a short between the cover plate 3 and the terminal bolt 14.

According to the thus described battery cell of this embodiment, the first crimping part 12b of the rivet 12 is crimped at its end in a state where it is inserted through the outer gasket 11, the cover plate 3, the plastic plate 10 and the current collector 8. When the end of the first crimping part 12b is crimped, the first crimping part 12b applies force to press the cover plate 3 in the direction orthogonal to the axis of the rivet 12. When this takes place, the bottom 12e of the non-through hole 12d in the end of the first crimping part 12b is located between the cover plate 3 and the current collector 8. With this arrangement, the first crimping part 12b is prevented from being pressed to expand toward the hollow portion in the vicinity of the cover plate 3. That is, this arrangement provides close contact between the first crimping part 12b and the cover plate 3, and thus reliably generates force causing the first crimping part 12b to press the cover plate 3. This ensures sealing between the cover plate 3 and the first crimping part 12b. What is more, the end of the first crimping part 12b has a hollow shaft shape, which ensures that deformation of the end of the first crimping part 12b into a flange shape is reliably achieved while eliminating the need for repeated crimping operations. Furthermore, the deformation of the first crimping part 12b into a flange shape allows the first crimping part 12b to press the cover plate 3 and the current collector 8 in the direction parallel to the axis of the rivet 12. With this, the plastic plate 10 arranged between the cover plate 3 and the current collector 8 and the outer gasket 11 arranged between the cover plate 3 and the body 12a are tightly pressed in a reliable manner, thereby ensuring sealing of the case 1.

With reference to FIG. 6, the first crimping part 12b of the rivet 12 has a solid portion around the through-hole 3a of the cover plate 3. Because of this, force is generated in the direction indicated by arrow A at the time of crimping, thereby ensuring sealing between the cover plate 3 and the rivet 12. The first crimping part 12b is hollow at the end, and therefore the end of the first crimping part 12b is deformed into a flange shape in a reliable manner at the time of crimping. As a result, force is generated in the direction indicated by arrow B so that the outer gasket 11, the cover plate 3, the plastic plate 10 and the current collector 8 are tightly pressed against each other, thereby ensuring sealing of the case 1.

The outer gasket 11 is arranged between the body 12a and the cover plate 3 at a location close to the body 12a of the rivet 12, and the plastic plate 10 is arranged between the cover plate 3 and the current collector 8 at a location close to the first crimping part 12b of the rivet 12. The end of the first crimping part 12b is crimped in this state. Because of this, the force, which is generated in the direction parallel to the axis of the rivet 12 when the end of the first crimping part 12b is deformed into a flange shape, is transmitted to the areas between the cover plate 3 and the current collector 8 and between the cover plate 3 and the body 12a. As a result, the plastic plate 10 and the outer gasket 11 are tightly pressed in a reliable manner, thereby maintaining sealing of the case 1 more effectively.

Furthermore, the annular projection 11d of the outer gasket 11 is inserted through the cover plate 3 while covering the outer circumference of the first crimping portion 12b, and therefore the outer gasket 11 is arranged to extend through between the cover plate 3 and the body 12a and between the cover plate 3 and the first crimping part 12b. With this arrangement, the outer gasket 11 arranged between the cover plate 3 and the body 12a and between the cover plate 3 and the first crimping part 12b is tightly pressed by the force generated by the crimping of the first crimping part 12b, thereby making it possible to maintain sealing of the case 1 more effectively.

Furthermore, the end of the first crimping part 12b is crimped to have a thickness, which decreases as it advances away from the axis of the first crimping part 12b. This increases the degree of contact between the end of the first crimping part 12b and the cover plate 3 or the current collector 8.

Note that an electric storage device according to the present invention is not limited to the above-described embodiment and that various changes may be made without departing from the scope of the present invention as defined by the present claims.

For example, in the above embodiment, the bottom 12e of the non-through hole 12d is located more internally in the case 1 than the inner surface SF of the cover plate 3. However, the present invention is not limited to this. For example, the bottom 12e of the non-through hole 12d may be located at the same or substantially the same level as the inner surface of the cover plate 3. In this arrangement too, only the end of the first crimping part 12b has a hollow shaft shape, and therefore the end of the first crimping part 12b can be formed into a flange shape necessary and sufficient to hold the plastic plate 10 and the outer gasket 11 therewith in a reliable manner.

The above embodiment has illustrated an example in which: on the premise that the first crimping part 12b is inserted through the cover plate 3 from outside the case 1 to inside the case 1, the end of the first crimping part 12b, which is to be located inside the case 1, is crimped. However, the present invention is not limited to this. For example, the rivet 12 may be made up of the body 12a and the first crimping part 12b and the first crimping part 12b may be inserted through the cover plate 3 from inside the case 1 to outside the case 1, so that the end of the first crimping part 12b, which is to be located outside the case 1, may be crimped.

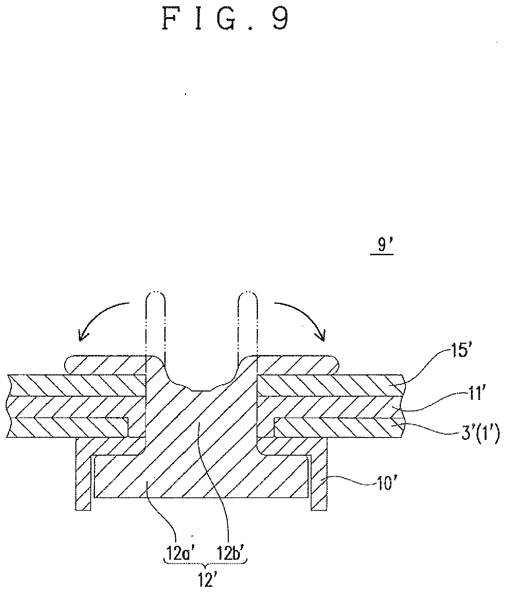

FIG. 9 illustrates a specific example of this. The terminal structure 9' includes a rivet 12' that is inserted through the cover plate 3' from inside the case 1' to outside the case 1'. The rivet 12' includes a body 12a' that is electrically connected to the electrode assembly (not shown) and an insertion part 12b' that is formed continuously with the body 12a' and inserted through the cover plate 3'. A plastic plate 10 is arranged on the inner surface of the cover plate 3', and an outer gasket 11' is arranged on the outer surface of the cover plate 3'. A drawing member 15' as a conductive member is arranged on the outer surface of the outer gasket 11'. The insertion part 12b' of the rivet 12' is inserted through the plastic plate 10', the cover plate 3', the outer gasket 11' and the drawing member 15' in this order. Then, the end of the insertion part 12b' projecting from the drawing member 15' is crimped.

The above embodiment has illustrated an example in which the body 12a of the rivet 12 has a shaft shape. However, the present invention is not limited to this. The body 12a of the rivet 12 may have any shape as long as it is not inserted through the cover plate 3, the current collector 8 and the like through which the first crimping part 12b is inserted, without being limited to a particular shape. In this respect, the body 12a of the rivet 12 may have a thin plate shape, for example.

The above embodiment has also illustrated an example in which the entire lower surface of the outer gasket 11 fits in the first recess 3b in the upper surface of the cover plate 3. Alternatively, a projection may be formed at the lower surface of the outer gasket 11, the first recess of the cover plate 3 may be sized to receive the projection, and the projection of the outer gasket 11 may fit in the first recess, as with the case of the terminal retainer 13.

The above embodiment has also illustrated an example in which the projection 13d is formed in the lower surface of the terminal retainer 13, the second recess 3c sized to receive the projection 13d is formed in the upper surface of the cover plate 3, and the projection 13d of the terminal retainer 13 fits in the second recess 3c of the cover plate 3. Alternatively, the projection 13d may not be formed, the second recess of the cover plate 3 may be sized to receive the entire lower surface of the terminal retainer 13, and the entire lower surface of the terminal retainer 13 may fit in the second recess, as with the case of the outer gasket 11.

It is preferred, however, that the cover plate 3 have the first recess 3b and second recess 3c because they can increase the moment of area of the cover plate 3, which results in enhancement of the mechanical strength of the cover plate 3. In this instance, reducing the size of one of the first recess 3b and the second recess 3c increases the distance between the first recess 3b and the second recess 3c. This prevents the first recess 3b and second recess 3c from affecting each other. The above embodiment has illustrated an example in which the first recess 3b for the outer gasket 11 is larger than the second recess 3c for the terminal retainer 13. This configuration is adopted on the ground that the flatness and mechanical strength of the cover plate 3 increase with an increase in the area of the first recess 3b, which results in an increase in sealing effect and durability.

For either the outer gasket 11 or the terminal retainer 13, the number of projections is not limited to one, and a plurality of projections may be formed. The outer gasket 11 and terminal retainer 13 need not be rectangular. For example, the outer gasket 11 and terminal retainer 13 may be circular, hexagonal, or octagonal.

The above embodiment has illustrated an example in which the current collector 8 for the positive electrode and the rivet 12 for the positive electrode include aluminum or an aluminum alloy while the current collector 8 for the negative electrode and the rivet 12 for the negative electrode include copper or a copper alloy. However, any materials may be used as long as the materials are conductive metal materials appropriate to the type of a battery cell. The above embodiment has also illustrated the materials for the terminal bolt 14 and drawing member 15. However, any materials may be used as long as the materials are conductive metal materials whose properties such as strength and conductivity are appropriate.

The above embodiment has illustrated an example in which the shaft (male thread part) 14b projects from the upper surface of the head 14a of the terminal bolt 14. However, a shaft in an appropriate form such as a circular or polygonal tube may project instead of the male thread part, and a threaded hole may be formed in an upper end surface of the shaft.

The electrode assembly is not limited to one of the winding type in the form of an elliptic cylinder as described in the above embodiment. The electrode assembly may have any other shape and may be one of the stacked type.

The above embodiment has illustrated an example in which the terminal structure 9 is arranged on the cover plate 3, but alternatively the terminal structure 9 may be arranged on the case body 2. That is, the rivet 12 may extend through the case body 2. In this instance too, an O-temper material may preferably be used for the case body 2. As will be understood, the case body 2 may include other aluminum alloys than an O-temper aluminum alloy or other metallic materials.

In the above embodiment, the rivet 12 is crimped at both ends (the ends of the first crimping part 12b and the second crimping part 12c). However, the present invention is not limited to this. For example, the rivet 12 may be made up of the body 12a and the first crimping part 12b, and the end of the first crimping part 12b may be crimped.

In the above embodiment, the rivet 12 and the terminal bolt 14 are separate components, which are electrically connected to each other via the drawing member 15. However, the present invention is not limited to this. For example, the rivet 12 and the shaft 14b of the terminal bolt 14 may be integrally formed. In this instance, the terminal retainer 13 is unnecessary.

In the above embodiment, the outer gasket 11 and the terminal retainer 13 are separately arranged on the outer surface of the cover plate 3, but the present invention is not limited to this. For example, the outer gasket 11 and the terminal retainer 13 may be integrally formed.

In the above embodiment, the outer gasket 11 has an annular projection 11d that is fitted into the through-hole 3a of the cover plate 3, but the present invention is not limited to this. For example, the plastic plate 10 may have an annular projection that can be fitted into the through-hole 3a of the cover plate 3. Alternatively, the outer gasket 11 and the plastic plate 10 may each have an annular projection that can be fitted into the through-hole 3a of the cover plate 3.

The above embodiment has been described in the context of a lithium ion secondary battery cell. However, the type and size (capacity) of a battery cell may be arbitrarily selected.

The present invention is not limited to lithium ion secondary battery cells and can also be applied to various secondary battery cells, primary battery cells, and capacitors such as an electric double layer capacitor.

In the above embodiment, the end of the first crimping part 12b of the rivet 12 is crimped to directly apply compression force to the periphery of the through-hole 8b of the connection part 8a of the current collector 8. However, the present invention is not limited to this. For example, a washer may be arranged on the connection part 8a, and the first crimping part 12b may be inserted through the through-hole 8b of the connection part 8a and a through-hole of the washer, so that the end of the first crimping part 12b projecting from the washer may be crimped. This allows the compression force by the crimped end of the first crimping part 12b to be applied to the washer, thereby making it possible to enhance the mechanical strength of the connection part 8a of the current collector 8.

## Claims

1. An electric storage device comprising:
an electrode assembly (4);
a case (1) that houses the electrode assembly (4), the case (1) including a defining wall (3);
a rivet (12) that passes through the defining wall, the rivet (12) having a body (12a) and an insertion part (12b) formed continuously with the body (12a);
a conductive member (8, 15) that is electrically connected to the rivet (12); and
a sealing member (10, 11) arranged between a surface of the defining wall which faces the conductive member (8, 15) and a surface of the conductive member (8, 15) which faces the defining wall and between a surface of the defining wall which faces the body (12a) and a surface of the body (12a) which faces the defining wall, wherein the sealing member (10, 11) is arranged at the defining wall, wherein the insertion part (12b) has a portion that is inserted through the defining wall, the sealing member (10, 11) and the conductive member (8, 15);
the insertion part (12b) has a diameter smaller than that of the body (12a) at least in the portion inserted through the defining wall, the sealing member (10, 11) and the conductive member (8, 15);
the insertion part (12b) has a hollow shaft-shaped end with a non-through hole (12d) extending in an axial direction of the insertion part (12b), the end being crimped in a state where the insertion part (12b) has been inserted through the defining wall, the sealing member (10, 11) and the conductive member (8, 15); and wherein said electric storage device is **characterised in that** bottom (12e) of the non-through hole (12d) is located between the surface of the defining wall which faces the conductive member (8, 15), and the surface of the conductive member (8, 15) which faces the defining wall.

2. The electric storage device according to claim 1, wherein
the insertion part (12b) is inserted through the defining wall toward the conductive member (8, 15); and
the sealing member (10, 11) comprises two sealing members (10, 11), one of which is arranged between the defining wall and the conductive member (8, 15) and the other of which is arranged between the defining wall and the body (12a).

3. The electric storage device according to claim 2, wherein
at least one of the sealing members (10, 11) has an annular projection (11d) that is inserted through the defining wall; and
the annular projection (11d) is inserted through the defining wall while covering the periphery of the insertion part (12b).

4. The electric storage device according to any one of claims 1 to 3, wherein the end of the insertion part (12b) is crimped to have a thickness, which decreases as the end of the insertion part (12b) advances away from the axis of the insertion part (12b).

5. The electric storage device according to any one of claims 1 to 4, wherein the insertion part (12b) is crimped only at the hollow shaft-shaped portion of the non-through hole (12d).

6. The electric storage device according to any one of claims 1 to 5, wherein the bottom (12e) of the non-through hole (12d) is located at a position between the defining wall and the conductive member (8, 15) and closer to the conductive member (8, 15) than to the defining wall.

7. The electric storage device according to any one of claims 1 to 6, wherein
the conductive member (8, 15) is a current collector (8) arranged inside the case (1), the current collector (8) being electrically connected to the electrode assembly (4);
the sealing member (10, 11) comprises an inner sealing member (10) arranged on an inner surface of the defining wall; and
the insertion part (12b) is inserted through the defining wall, the inner sealing member (10) and the current collector (8) from outside the case (1) to inside the case (1).

8. The electric storage device according to any one of claims 1 to 6, wherein
the conductive member (8, 15) is a current collector (8) arranged inside the case (1), the current collector (8) being electrically connected to the electrode assembly (4);
the sealing member (10, 11) comprises an outer sealing member (11) arranged on an outer surface of the defining wall; and
the insertion part (12b) is inserted through the outer sealing member (11), the defining wall and the current collector (8) from outside the case (1) to inside the case (1).

9. The electric storage device according to any one of claims 1 to 6, wherein
the conductive member (8, 15) is a drawing member (15) arranged outside the case (1);
the sealing member (10, 11) comprises an inner sealing member (10) arranged on an inner surface of the defining wall; and
the insertion part (12b) is inserted through the inner sealing member (10), the defining wall and the drawing member (15) from inside the case (1) to outside the case (1).

10. The electric storage device according to any one of claims 1 to 6, wherein
the conductive member (8, 15) is a drawing member (15) arranged outside the case (1);
the sealing member (10, 11) comprises an outer sealing member (11) arranged on an outer surface of the defining wall; and
the insertion part (12b) is inserted through the defining wall, the outer sealing member (11) and the drawing member (15) from inside the case (1) to outside the case (1).

11. The electric storage device according to any one of claims 1 to 6, wherein
the conductive member (8, 15) is a current collector (8) arranged inside the case (1), the current collector (8) being electrically connected to the electrode assembly (4);
the sealing member (10, 11) comprises an inner sealing member (10) arranged on an inner surface of the defining wall and an outer sealing member (11) arranged on an outer surface of the defining wall; and
the insertion part (12b) is inserted through the outer sealing member (11), the defining wall, the inner sealing member (10) and the current collector (8) from outside the case (1) to inside the case (1).

12. The electric storage device according to any one of claims 1 to 6, wherein
the conductive member (8, 15) is a drawing member (15) arranged outside the case (1);
the sealing member (10, 11) comprises an outer sealing member (11) arranged on an outer surface of the defining wall and an inner sealing member (10) arranged on an inner surface of the defining wall; and
the insertion part (12b) is inserted through the inner sealing member (10), the defining wall, the outer sealing member (11) and the drawing member (15) from inside the case (1) to outside the case (1).

## Patentansprüche

1. Elektrische Speichervorrichtung mit:
einer Elektrodenanordnung (4);
einem Gehäuse (1), das die Elektrodenanordnung (4) aufnimmt, wobei das Gehäuse (1) eine definierende Wand (3) aufweist;
einer sich durch die definierende Wand erstreckenden Niete (12), wobei die Niete (12) einen Körper (12a) und einen mit dem Körper (12a) zusammenhängend ausgebildeten Einsetzabschnitt (12b) aufweist;
einem leitfähigen Element (8, 15), das mit der Niete (12) elektrisch verbunden ist; und
einem Dichtelement (10, 11), das zwischen einer dem leitfähigen Element (8, 15) zugewandten Oberfläche der definierenden Wand und einer der definierenden Wand zugewandten Oberfläche des leitfähigen Elements (8, 15) und zwischen einer dem Körper (12a) zugewandten Oberfläche der definierenden Wand und einer der definierenden Wand zugewandten Oberfläche des Körpers (12a) angeordnet ist, wobei das Dichtelement (10, 11) an der definierenden Wand angeordnet ist,
wobei der Einsetzabschnitt (12b) einen Abschnitt aufweist, der durch die definierende Wand, das Dichtelement (10, 11) und das leitfähige Element (8, 15) eingesetzt wird,
der Einsetzabschnitt (12b) zumindest in dem durch die definierende Wand, das Dichtelement (10, 11) und das leitfähige Element (8, 15) eingesetzten Abschnitt einen Durchmesser hat, der kleiner ist als derjenige des Körpers (12a),
der Einsetzabschnitt (12b) ein hohlschaftförmiges Ende mit einem nicht durchgehenden Loch (12d) aufweist, das sich in einer axialen Richtung des Einsetzabschnitts (12b) erstreckt, wobei das Ende in einem Zustand gekrimpt wird, in dem der Einsetzabschnitt (12b) durch die definierende Wand, das Dichtelement (10, 11) und das leitende Material (8, 15) eingesetzt worden ist, und
wobei die elektrische Speichervorrichtung **dadurch gekennzeichnet ist, dass**
ein Boden (12e) des nicht durchgehenden Lochs (12d) zwischen der dem leitfähigen Element (8, 15) zugewandten Oberfläche der definierenden Wand und der der definierenden Wand zugewandten Oberfläche des leitfähigen Elements (8, 15) angeordnet ist.

2. Elektrische Speichervorrichtung nach Anspruch 1, wobei der Einsetzabschnitt (12b) durch die definierende Wand zum leitfähigen Element (8, 15) hin eingeführt wird, und
das Dichtelement (10, 11) zwei Dichtelemente (10, 11) aufweist, von denen eines zwischen der definierenden Wand und dem leitfähigen Element (8, 15) und das andere zwischen der definierenden Wand und dem Körper (12a) angeordnet ist.

3. Elektrische Speichervorrichtung nach Anspruch 2, wobei mindestens eines der Dichtelemente (10, 11) einen ringförmigen Vorsprung (11d) aufweist, der durch die definierende Wand eingeführt wird, und
der ringförmige Vorsprung (11d) durch die definierende Wand eingeführt wird, während der Umfang des Einsetzabschnitts (12b) abgedeckt ist.

4. Elektrische Speichervorrichtung nach einem der Ansprüche 1 bis 3, wobei das Ende des Einsetzabschnitts (12b) derart gekrimpt ist, dass seine Dicke mit zunehmendem Abstand des Endes des Einsetzabschnitts (12b) von der Achse des Einsetzabschnitts (12b) abnimmt.

5. Elektrische Speichervorrichtung nach einem der Ansprüche 1 bis 4, wobei der Einsetzabschnitt (12b) nur am hohlschaftförmigen Abschnitt des nicht durchgehenden Lochs (12d) gekrimpt ist.

6. Elektrische Speichervorrichtung nach einem der Ansprüche 1 bis 5, wobei der Boden (12e) des nicht durchgehenden Lochs (12d) an einer Stelle zwischen der definierenden Wand und dem leitfähigen Element (8, 15) und näher am leitfähigen Element (8, 15) als an der definierenden Wand angeordnet ist.

7. Elektrische Speichervorrichtung nach einem der Ansprüche 1 bis 6, wobei
das leitfähige Element (8, 15) ein innerhalb des Gehäuses (1) angeordneter Stromkollektor (8) ist, wobei der Stromkollektor (8) mit der Elektrodenanordnung (4) elektrisch verbunden ist,
das Dichtelement (10, 11) ein auf einer Innenfläche der definierenden Wand angeordnetes inneres Dichtelement (10) aufweist, und
das Einsetzelement (12b) durch die definierende Wand, das innere Dichtelement (10) und den Stromkollektor (8) von außerhalb des Gehäuses (1) zum Inneren des Gehäuses (1) eingeführt wird.

8. Elektrische Speichervorrichtung nach einem der Ansprüche 1 bis 6, wobei
das leitfähige Element (8, 15) ein innerhalb des Gehäuses (1) angeordneter Stromkollektor (8) ist, wobei der Stromkollektor (8) mit der Elektrodenanordnung (4) elektrisch verbunden ist,
das Dichtelement (10, 11) ein auf einer Außenfläche der definierenden Wand angeordnetes äußeres Dichtelement (11) aufweist, und
der Einsetzabschnitt (12b) durch das äußere Dichtelement (11), die definierende Wand und den Stromkollektor (8) von außerhalb des Gehäuses (1) in das Innere des Gehäuses (1) eingeführt wird.

9. Elektrische Speichervorrichtung nach einem der Ansprüche 1 bis 6, wobei
das leitfähige Element (8, 15) ein außerhalb des Gehäuses (1) angeordnetes Anziehelement (15) ist,
das Dichtelement (10, 11) ein auf einer Innenfläche der definierenden Wand angeordnetes inneres Dichtelement (10) aufweist, und
der Einsetzabschnitt (12b) durch das innere Dichtelement (10), die definierende Wand und das Anziehelement (15) vom Inneren des Gehäuses (1) zur Außenseite des Gehäuses (1) eingeführt wird.

10. Elektrische Speichervorrichtung nach einem der Ansprüche 1 bis 6, wobei
das leitfähige Element (8, 15) ein außerhalb des Gehäuses (1) angeordnetes Anziehelement (15) ist,
das Dichtelement (10, 11) ein auf einer Außenfläche der definierenden Wand angeordnetes äußeres Dichtelement (11) aufweist, und
der Einsetzabschnitt (12b) durch die definierende Wand, das äußere Dichtelement (11) und das Anziehelement (15) vom Inneren des Gehäuses (1) zur Außenseite des Gehäuses (1) eingeführt wird.

11. Elektrische Speichervorrichtung nach einem der Ansprüche 1 bis 6, wobei
das leitfähige Element (8, 15) ein innerhalb des Gehäuses (1) angeordneter Stromkollektor (8) ist, wobei der Stromkollektor (8) mit der Elektrodenanordnung (4) elektrisch verbunden ist,
das Dichtelement (10, 11) ein an einer Innenfläche der definierenden Wand angeordnetes inneres Dichtelement (10) und ein an einer Außenfläche der definierenden Wand angeordnetes äußeres Dichtelement (11) aufweist, und
der Einsetzabschnitt (12b) durch das äußere Dichtelement (11), die definierende Wand, das innere Dichtelement (10) und den Stromkollektor (8) von außerhalb des Gehäuses (1) zum Inneren des Gehäuses (1) eingeführt wird.

12. Elektrische Speichervorrichtung nach einem der Ansprüche 1 bis 6, wobei
das leitfähige Element (8, 15) ein außerhalb des Gehäuses (1) angeordnetes Anziehelement (15) ist,
das Dichtelement (10, 11) ein an einer Außenfläche der definierenden Wand angeordnetes äußeres Dichtelement (11) und ein an einer Innenfläche der definierenden Wand angeordnetes inneres Dichtelement (10) aufweist, und
der Einsetzabschnitt (12b) durch das innere Dichtelement (10), die definierende Wand, das äußere Dichtelement (11) und das Anziehelement (15) vom Inneren des Gehäuses (1) zur Außenseite des Gehäuses (1) eingeführt wird.

## Revendications

1. Dispositif de stockage électrique comprenant :
un ensemble d'électrodes (4) ;
un boîtier (1) qui abrite l'ensemble d'électrodes (4), le boîtier (1) comprenant une paroi de définition (3) ;
un rivet (12) qui passe à travers la paroi de définition, le rivet (12) ayant un corps (12a) et une pièce d'insertion (12b) formée de manière continue avec le corps (12a) ;
un élément conducteur (8, 15) qui est connecté électriquement au rivet (12) ; et
un élément d'étanchéité (10, 11) agencé entre une surface de la paroi de définition qui fait face à l'élément conducteur (8, 15) et une surface de l'élément conducteur (8, 15) qui fait face à la paroi de définition et entre une surface de la paroi de définition qui fait face au corps (12a) et une surface du corps (12a) qui fait face à la paroi de définition, dans lequel l'élément d'étanchéité (10, 11) est agencé au niveau de la paroi de définition,
dans lequel la pièce d'insertion (12b) a une partie qui est insérée à travers la paroi de définition, l'élément d'étanchéité (10, 11) et l'élément conducteur (8, 15) ;
la pièce d'insertion (12b) a un diamètre inférieur à celui du corps (12a) au moins dans la partie insérée à travers la paroi de définition, l'élément d'étanchéité (10, 11) et l'élément conducteur (8, 15) ;
la pièce d'insertion (12b) a une extrémité en forme d'arbre creux avec un trou non traversant (12d) s'étendant dans une direction axiale de la pièce d'insertion (12b), l'extrémité étant sertie dans un état où la pièce d'insertion (12b) a été insérée à travers la paroi de définition, l'élément d'étanchéité (10, 11) et l'élément conducteur (8, 15) ; et
dans lequel ledit dispositif de stockage électrique est **caractérisé en ce qu'**un fond (12e) du trou non traversant (12d) est situé entre la surface de la paroi de définition qui fait face à l'élément conducteur (8, 15), et la surface de l'élément conducteur (8, 15) qui fait face à la paroi de définition.

2. Dispositif de stockage électrique selon la revendication 1, dans lequel
la pièce d'insertion (12b) est insérée à travers la paroi de définition en direction de l'élément conducteur (8, 15) ; et
l'élément d'étanchéité (10, 11) comprend deux éléments d'étanchéité (10, 11), dont l'un est agencé entre la paroi de définition et l'élément conducteur (8, 15) et dont l'autre est agencé entre la paroi de définition et le corps (12a).

3. Dispositif de stockage électrique selon la revendication 2, dans lequel
au moins l'un des éléments d'étanchéité (10, 11) a une saillie annulaire (11d) qui est insérée à travers la paroi de définition ; et
la saillie annulaire (11d) est insérée à travers la paroi de définition tout en recouvrant la périphérie de la pièce d'insertion (12b).

4. Dispositif de stockage électrique selon l'une quelconque des revendications 1 à 3, dans lequel l'extrémité de la pièce d'insertion (12b) est sertie pour avoir une épaisseur, laquelle diminue à mesure que l'extrémité de la pièce d'insertion (12b) s'éloigne de l'axe de la pièce d'insertion (12b).

5. Dispositif de stockage électrique selon l'une quelconque des revendications 1 à 4, dans lequel la pièce d'insertion (12b) est sertie uniquement au niveau de la partie en forme d'arbre creux du trou non traversant (12d).

6. Dispositif de stockage électrique selon l'une quelconque des revendications 1 à 5, dans lequel le fond (12e) du trou non traversant (12d) est situé au niveau d'une position entre la paroi de définition et l'élément conducteur (8, 15) et plus près de l'élément conducteur (8, 15) que de la paroi de définition.

7. Dispositif de stockage électrique selon l'une quelconque des revendications 1 à 6, dans lequel
l'élément conducteur (8, 15) est un collecteur de courant (8) agencé à l'intérieur du boîtier (1), le collecteur de courant (8) étant connecté électriquement à l'ensemble d'électrodes (4) ;
l'élément d'étanchéité (10, 11) comprend un élément d'étanchéité interne (10) agencé sur une surface interne de la paroi de définition ; et
la pièce d'insertion (12b) est insérée à travers la paroi de définition, l'élément d'étanchéité interne (10) et le collecteur de courant (8) depuis l'extérieur du boîtier (1) vers l'intérieur du boîtier (1).

8. Dispositif de stockage électrique selon l'une quelconque des revendications 1 à 6, dans lequel
l'élément conducteur (8,15) est un collecteur de courant (8) agencé à l'intérieur du boîtier (1), le collecteur de courant (8) étant connecté électriquement à l'ensemble d'électrodes (4) ;
l'élément d'étanchéité (10, 11) comprend un élément d'étanchéité externe (11) agencé sur une surface externe de la paroi de définition ; et
la pièce d'insertion (12b) est insérée à travers l'élément d'étanchéité externe (11), la paroi de définition et le collecteur de courant (8) depuis l'extérieur du boîtier (1) vers l'intérieur du boîtier (1).

9. Dispositif de stockage électrique selon l'une quelconque des revendications 1 à 6, dans lequel
l'élément conducteur (8, 15) est un élément étireur (15) agencé à l'extérieur du boîtier (1) ;
l'élément d'étanchéité (10, 11) comprend un élément d'étanchéité interne (10) agencé sur une surface interne de la paroi de définition ; et
la pièce d'insertion (12b) est insérée à travers l'élément d'étanchéité interne (10), la paroi de définition et l'élément étireur (15) depuis l'intérieur du boîtier (1) vers l'extérieur du boîtier (1).

10. Dispositif de stockage électrique selon l'une quelconque des revendications 1 à 6, dans lequel
l'élément conducteur (8, 15) est un élément étireur (15) agencé à l'extérieur du boîtier (1) ;
l'élément d'étanchéité (10, 11) comprend un élément d'étanchéité externe (11) agencé sur une surface externe de la paroi de définition ; et
la pièce d'insertion (12b) est insérée à travers la paroi de définition, l'élément d'étanchéité externe (11) et l'élément étireur (15) depuis l'intérieur du boîtier (1) vers l'extérieur du boîtier (1).

11. Dispositif de stockage électrique selon l'une quelconque des revendications 1 à 6, dans lequel
l'élément conducteur (8, 15) est un collecteur de courant (8) agencé à l'intérieur du boîtier (1), le collecteur de courant (8) étant connecté électriquement à l'ensemble d'électrodes (4) ;
l'élément d'étanchéité (10, 11) comprend un élément d'étanchéité interne (10) agencé sur une surface interne de la paroi de définition et un élément d'étanchéité externe (11) agencé sur une surface externe de la paroi de définition ; et
la pièce d'insertion (12b) est insérée à travers l'élément d'étanchéité externe (11), la paroi de définition, l'élément d'étanchéité interne (10) et le collecteur de courant (8) depuis l'extérieur du boîtier (1) vers l'intérieur du boîtier (1).

12. Dispositif de stockage électrique selon l'une quelconque des revendications 1 à 6, dans lequel
l'élément conducteur (8, 15) est un élément étireur (15) agencé à l'extérieur du boîtier (1) ;
l'élément d'étanchéité (10, 11) comprend un élément d'étanchéité externe (11) agencé sur une surface externe de la paroi de définition et un élément d'étanchéité interne (10) agencé sur une surface interne de la paroi de définition ; et
la pièce d'insertion (12b) est insérée à travers l'élément d'étanchéité interne (10), la paroi de définition, l'élément d'étanchéité externe (11) et l'élément étireur (15) depuis l'intérieur du boîtier (1) vers l'extérieur du boîtier (1).
